(19) Europäisches Patentamt
European Patent Office
Office européen des brevets

(11) **EP 1 511 552 B1**

(12) **EUROPEAN PATENT SPECIFICATION**

(45) Date of publication and mention
of the grant of the patent:
**21.11.2007 Bulletin 2007/47**

(21) Application number: **03741792.0**

(22) Date of filing: **09.05.2003**

(51) Int Cl.:
***B01D 53/60*** (2006.01)

(86) International application number:
**PCT/US2003/014652**

(87) International publication number:
**WO 2003/103807 (18.12.2003 Gazette 2003/51)**

(54) **OXIDATION OF NO X'S WITH CHLORINE DIOXIDE IN COMBINATION WITH A THERMAL NO X REMOVAL PROCESS**

OXIDATION VON NOX UNTER VERWENDUNG VON CHLORDIOXID ZUSAMMEN MIT THERMISCHEM VERFAHREN ZUR BESEITIGUNG VON NOX

OXYDATION DES NOX AU MOYEN DE DIOXYDE DE CHLORE, EN COMBINAISON AVEC UN PROCEDE THERMIQUE D'ELIMINATION DE NOX

(84) Designated Contracting States:
**AT BE BG CH CY CZ DE DK EE ES FI FR GB GR HU IE IT LI LU MC NL PT RO SE SI SK TR**

(30) Priority: **05.06.2002 US 386560 P**
**05.06.2002 US 386492 P**
**24.01.2003 US 442268 P**

(43) Date of publication of application:
**09.03.2005 Bulletin 2005/10**

(73) Proprietor: **ExxonMobil Research and Engineering Company**
**Annandale, NJ 08801-0900 (US)**

(72) Inventors:
• **TAKACS, Theresa, J.**
**Annadale, VA 22003 (US)**
• **BALMER, Robert, G.**
**Glen Gardner, NJ 08826 (US)**
• **HURST, Boyd, E.**
**Humble, TX 77346 (US)**
• **MCLAUGHLIN, William, J.**
**Houston, Texas 77006 (US)**
• **KNIGHT, David, G.**
**Fairfax, VA 22030 (US)**
• **CUNIC, John, D.**
**Denville, NJ 07834-9532 (US)**
• **SHAW, Henry**
**Scotch Plains, NJ 07076 (US)**
• **YANG, Chen-Lu**
**Millburn, NJ 07041 (US)**
• **GU, Pin**
**Belleville, NJ 07109 (US)**

(74) Representative: **Dew, Melvyn John et al**
**ExxonMobil Chemical Patents Inc.,**
**P.O. Box 105**
**1830 Machelen (BE)**

(56) References cited:
**EP-A- 0 199 037**     **EP-A- 0 962 247**
**DE-A- 3 721 607**     **GB-A- 1 472 985**

• **DATABASE WPI Derwent Publications Ltd., London, GB; AN 1977-85600y XP002252582 & JP 52 125462 A (NGK INSULATORS LTD.), 21 October 1977 (1977-10-21)**

**Description**

## FIELD OF THE INVENTION

The present invention relates to a process for reducing $NO_x$ concentrations in waste gas streams. More particularly, the present invention relates to a process for reducing $NO_x$ concentrations in waste gas streams by contacting the waste gas stream with a reducing agent selected from ammonia and urea. Chlorine dioxide is then mixed with the waste gas streams in a manner such that the chlorine dioxide oxidizes at least a portion of the lower $NO_x$'s present in the waste gas streams to higher oxides.

## BACKGROUND OF THE INVENTION

Increasingly stringent government regulatory emission standards have forced refiners to explore improved technologies for reducing the concentration of nitrogen oxides ($NO_x$) in emissions from combustion and production effluent streams. Various technologies have been developed for reducing nitrogen oxides emissions from combustion and production effluents, such as, for example, United States Patent Number 3,957,949 to Senjo, et al, and United States Patent Number 6,294,139 to Vicard et al., which are both incorporated herein by reference. Further, it is known in the art to reduce $NO_x$ concentrations in combustion effluent streams by the injection of ammonia, and one such patent utilizing this technology is United States Patent Number 3,900,554 to Lyon, which is incorporated herein by reference. After the Lyon patent, there was a proliferation of patents and publications relating to the injection of ammonia into combustion effluent streams in order to reduce the concentration of $NO_x$'s. Such patents include United States Patent Numbers 4,507,269, Dean et al., and 4,115,515, Tenner et al., which are also incorporated herein by reference. Other patents disclose the use of ammonia injection based on the use of kinetic modeling to determine the amount of ammonia injected. Such patents include United States Patent Numbers 4,636,370, 4,624,840, and 4,682,468, all to Dean et al., and all of which are also incorporated herein by reference. There have also been a number of patents and publications relating to the injection of urea into combustion effluent streams in order to reduce the concentration of $NO_x$. One such patent covering this technology is United States Patent Number 4,208,386 to Arand et al., which is incorporated herein by reference. A study by Kim and Lee (1996), incorporated herein by reference, published in the Journal of Chemical Engineering of Japan, "Kinetics of NOx Reduction by Urea Solution in a Pilot Scale Reactor", Journal of Chemical Engineering of Japan, Vol. 29, No. 4, 1996. pp. 620-626, shows that urea dissociates to ammonia and cyanuric acid (HNCO) and that both of these act as reducing agents for NO in two interrelated chains of free radical reactions.

However, effluents released from combustion units and production streams, such as the regenerator off gas from a fluidized catalytic cracking process unit remain a source of $NO_x$'s from refineries. In most refineries, fluidized catalytic cracking process units incorporate wet gas scrubbers to remove attrited catalyst fines that have the added benefit to the refiner of reducing, to a degree, $NO_x$ emissions because wet gas scrubbers also scrub $NO_2$ from the fluidized catalytic cracking process unit's waste gas streams. However, the use of these scrubbers is not entirely effective in reducing $NO_x$ emissions because in existing scrubbed and/or saturated gas systems, such as wet gas scrubbers on combustion units like the fluidized catalytic cracking unit, the off-gasses typically contain NO and $NO_2$. $NO_2$ can be removed by scrubbing, but NO cannot. The fact that NO cannot be removed by scrubbing is a problem because the majority of the $NO_x$'s contained in these wet gas streams is NO. For example, the $NO_x$'s in the off gas of a fluidized catalytic cracking unit sent to the wet gas scrubber is typically about 90% NO.

**[0004]** Thus, many refiners have experimented and implemented techniques to oxidize $NO_x$'s to higher oxides, and these techniques have been met with mixed results. Most of the techniques used today involve chemicals that require extended reaction periods, and others create problems within the processing unit. Such problems include, for example, corrosion of materials of construction, problems with treating the waste water of the units, as well as problems with the removal of $SO_x$'s. For example, it is known in the art to add sodium chlorite ($NaClO_2$) to the wet gas scrubber liquor to oxidize $NO_x$'s to higher oxides such as, for example, $NO_2$ and $N_2O_5$ which are water soluble and can be removed from the process system, typically as nitrate and nitrite, respectively. The solubility of these higher oxides in water is described by J.B. Joshi, V.V. Mahajani, and V.A. Juvekar in "Invited Review: Absorption of NOx Gases," Chemical Engineering Communication, Vol. 33 pp 1-92; which is incorporated herein by reference.

JP 52125462 discloses a wet desulplurise denitration process.
EP0962247 discloses a process for the removal of $NO_x$ and $SO_x$ emissions from gaseous effluents.

However, the addition of $NaClO_2$ to the scrubber liquor has problems. For example, sodium chlorite is a costly chemical and is consumed by side reactions such as the oxidation of $SO_x$'s to higher oxides (e.g. $SO_2$ to $SO_3$). Thus, because sodium chlorite does not selectively oxidize $NO_x$'s to higher oxides, conventional methods used high sodium chlorite concentrations in the scrubber liquor to achieve the desired reduction of $NO_x$'s. These high levels of sodium chlorite lead to high chloride levels which cause, among other problems, corrosion of the scrubber's materials of construction.

Thus, there exists a need in the art to economically remove $NO_x$'s from waste gas streams.

## SUMMARY OF THE INVENTION

According to the invention there is provided a process as defined in any one of the accompanying claims. In an embodiment, the presently disclosed invention provides a process for removing $NO_x$'s contained in an $SO_x$-containing waste gas stream, which stream contains both lower and higher nitrogen oxides, which process comprises:

a) forming a mixture of a reducing agent selected from ammonia and urea and a readily-oxidizable gas in an effective amount that will reduce the $NO_x$ concentration of said waste gas stream by a predetermined amount;
b) injecting said mixture into said waste gas stream at a point wherein said $SO_x$-containing waste gas stream is at a temperature below about 870°C (1600°F);
c) removing at least a portion of the $SO_x$ present in said waste gas stream;
d) mixing an effective amount of chlorine dioxide with said waste gas stream at a point downstream from step c) above thereby oxidizing at least a portion of the lower oxide $NO_x$'s present in said waste gas stream to higher oxides; and
e) removing at least a portion of said higher oxides by a means selected from the group consisting of alkaline solution absorption, reducing solution absorption, scrubbing with water, ammonia injection, and catalytic conversion.

In one embodiment of the present invention, spray nozzles of a wet gas scrubber separator drum are used to mix the chlorine dioxide with the $SO_x$-containing waste gas stream.
In another embodiment of the present invention, an effective amount of reducing agent and readily-oxidizable gas are injected into an existing regenerator overhead line at a point upstream of an FCCU's heat recovery device.
In another embodiment of the present invention, an effective amount of reducing agent and readily-oxidizable gas are simultaneously injected into an existing regenerator overhead line at multiple locations upstream of an FCCU's heat recovery device.
In yet another embodiment of the present invention, the readily-oxidizable gas is hydrogen and the reducing agent is ammonia.

## DETAILED DESCRIPTION OF THE PRESENT INVENTION

As used herein, the terms $NO_x$'s, nitrogen oxides or nitrogen oxide refers to the various oxides of nitrogen that may be present in waste gasses. Thus, the terms refer to all of the various oxides of nitrogen including, but not limited to, nitric oxide (NO), nitrogen dioxide ($NO_2$), nitrogen peroxide ($N_2O_4$), nitrogen pentoxide ($N_2O_5$), and mixtures thereof. However, the term also loosely refers to nitric oxide (NO) since NO typically comprises greater than about 90% of the nitrogen oxides present in combustion waste gasses upon which the presently claimed invention is practiced. Therefore, the presently claimed process is especially concerned with the reduction and control of NO. Also, the terms flue gas, wet gas, combustion waste gas, and waste gas stream are used interchangeably herein to refer to the same scrubbed and/or saturated gas streams. Also, the terms wet gas scrubber, scrubbing apparatus, and scrubber are used interchangeably herein. It should also be noted that "higher oxide" as used herein is meant to refer to any $NO_x$ wherein "x" is two or greater.
Also, an effective amount of chlorine dioxide, as used herein, is an amount that oxidizes at least a portion, about 10 vol.%, of the $NO_x$'s present in the waste gas stream, for example about 10 vol.% to about 80 vol.%, preferably about 40 vol.% to about 90 vol.% of the $NO_x$'s, more preferably about 50 vol.% to about 99 vol.%, and most preferably substantially all of the $NO_x$'s present in the waste gas stream are oxidized to higher oxides.
. It should also be noted that mixing, as used herein when describing the mixing of a reducing agent and a readily-oxidizable gas, is meant to refer to the broadest meaning given the term. Thus, mixing refers to the objective of maximizing the local contact of a reducing agent and a readily-oxidizable gas with the $NO_x$ in the waste gas stream at the desired molar ratios. Any suitable mixing techniques can be employed to achieve this end. These techniques include, but are not limited to, using a carrier gas with the reducing agent and/or readily-oxidizable gas to encourage more homogenous mixing; injecting a premixed stream of a reducing agent, readily-oxidizable gas and carrier gas into the waste gas stream; or, injecting a stream of reducing agent and carrier gas and a stream of readily-oxidizable gas and carrier gas into the waste gas stream separately. Non-limiting examples of suitable pre-injection mixing techniques, processes or means include piping the reducing agent, readily-oxidizable gas and carrier gas through separate lines into one common vessel or into the injection line to the waste gas stream, allowing the two reagents and the carrier to mix as they flow towards the injection point.
The present invention provides a cost-effective manner whereby refiners can remove $NO_x$'s from waste gas streams. The oxidation of $NO_x$'s to higher oxides is an effective way to remove $NO_x$'s from flue gas streams because the higher nitrogen oxides such as, for example, $NO_2$ and $N_2O_5$ are water soluble and can be removed from the system as nitrate or nitrite. Thus, the presently claimed process involves forming a mixture of a reducing agent and readily oxidizable gas in amounts effective at reducing the $NO_x$ concentration of the waste gas stream by a predetermined amount, removing at least a portion of the $SO_x$'s present in the stream, and adding an effective amount of chlorine dioxide to the waste gas stream whereby a portion of the $NO_x$'s contained in the waste gas stream are oxidized to higher oxides (e.g. NO oxidized to $NO_2$). The higher oxides are then removed by a method selected from alkaline solution absorption, reducing solution absorption, scrubbing ammonia injection, catalytic conversion and absorption with water.

However, the instant invention is especially suited for reducing the concentration of $NO_x$'s within the process flow scheme of a Fluidized Catalytic Cracking Unit ("FCCU"). Fluidized catalytic cracking is an important and widely used refinery process. The catalytic cracking process typically converts heavy oils into lighter products such as gasoline. In the fluidized catalytic cracking (FCC) process, an inventory of particulate catalyst is continuously cycled between a cracking reactor and a catalyst regenerator. Average reactor temperatures are in the range of about 480-540°C (900-1000°F), with average feed temperatures from about 260-430°C (500-800°F). The reactor and the regenerator together provide the primary components of the catalytic cracking unit. FCC process units are well known in the art and United States Patent Number 5,846,403, Swan, et al., incorporated herein by reference, provides a more detailed discussion of such a unit.

The regenerator is especially important to catalyst life and effectiveness because during the fluidized catalytic cracking process, carbonaceous deposits (coke) are formed on the catalyst, which substantially decrease its activity. The catalyst is then typically regenerated to regain its effectiveness by burning off at least a portion of the coke in the regenerator. This is typically done by injecting air, or another gas having a combustible amount of oxygen, into the regenerator at a rate sufficient to fluidize the spent catalyst particles. A portion of the coke contained on the catalyst particles is combusted in the regenerator, resulting in regenerated catalyst particles Typical regenerator temperatures range from about 560°C (1050°F) to about 780°C (450°F), while exit temperatures of the regenerator off-gas usually range from about 650°C (1200°F) to about 820°C (1500°F).

. After regeneration, the catalyst particles are cycled back to the reactor. The regenerator off-gas is usually passed to further processes such as heat recovery devices, particulate removal devices, carbon monoxide combustion/ heat recovery units (COHRU), which, as previously mentioned, are designed to convert CO to $CO_2$ and recover available fuel energy, and $SO_x$ removal devices.

In this preferred embodiment of the present invention, the initial $NO_x$ removal step removes at least a portion of the $NO_x$'s present in the waste gas stream, thus reducing the amount of chlorine dioxide needed to oxidize the remaining $NO_x$'s present in the waste gas stream. In this first removal step, a predetermined amount of the NOx's is removed from the waste gas stream. This predetermined amount is typically at least about 10 vol.%, preferably more than about 30% by volume, more preferably more than about 50% by volume, and most preferably a reduction of more than about 70% by volume, based on the total volume of $NO_x$ present in the process stream.

The $NO_x$'s are removed through the use of an effective amount of a reducing agent selected from urea and ammonia. Preferred is ammonia. An effective amount of reducing agent is to be considered that amount of reducing agent that will reduce the $NO_x$ concentration by the predetermined amount. An effective amount of reducing agent will typically range from about 0.5-12 moles of reducing agent per mole of $NO_x$, preferably about 0.5-8 moles of reducing agent per mole of $NO_x$. It is most preferred to use 1-4 moles of reducing agent per mole of $NO_x$. It should be noted that the reducing agent is used in conjunction with a readily-oxidizable gas for purposes of this invention.

It is believed that a complex chain of free radical reactions achieves the non-catalytic reduction of $NO_x$ with the present reducing agent and readily-oxidizable gas. Not wanting to be limited by theory, the inventors herein believe the overall effect can be illustrated by the following two competing reactions:

$$\textbf{Equation 1: } NO + NH_3 + O_2 \rightarrow N_2 + H_2O \textbf{ (reduction)}$$

$$\textbf{Equation 2: } NH_3 + O_2 \rightarrow NO + H_2O \textbf{ (oxidation)}$$

The use of urea as the reducing agent introduces cyanuric acid (HNCO) as well as ammonia to the process. As demonstrated in the work of Lee and Kim (1996), cyanuric acid acts as a reducing agent for NO and also interacts with the $NO-NH_3-O_2$ chemistry summarized in Equations 1 and 2. Although the cyanuric acid reduction process is not thoroughly understood, and not wishing to be limited by theory, the inventors hereof believe that the dissociation of one mole of urea liberates one mole of ammonia and one mole of cyanuric acid. Experimental data from the Kim and Lee study (1996) suggests that cyanuric acid stoichiometrically reduces NO to elemental nitrogen and water at a molar ratio with NO of 1:1. Thus, urea should generally be used at a molar ratio to NO that is roughly one half the effective molar ratio for ammonia.

The reduction reaction of Equation 1 dominates in the 870°C-1100°C (1600°F-2000°F) temperature range. Above 1100°C (2000°F), the reaction of Equation 2 becomes more prevalent. Thus, in the practice of the present invention, it is desirable to operate at temperatures below about 1100°F (2000°F). However, operating temperatures lower than about 870°C (1600°F) are achievable with the reduction reaction still being dominated by Equation 1 through the use of the present invention. The inventors hereof have unexpectedly found that, at temperatures below about 870°C (1600°F), the reduction reaction of Equation 1 will not effectively reduce $NO_x$ without the injection of a readily-oxidizable gas, such as hydrogen. It should be noted that as the temperature of the process stream decreases, the amount of readily-oxidizable gas needed to drive the reduction reaction increases. However, the inventors herein have determined that the molar ratios of readily-oxidizable gas disclosed herein can be used at an effective operating temperature range below about 870°C (1600°F), even below about 700°C (1300°F), with the reduction reaction still being dominated by Equation 1. This makes the present invention especially suited for reducing $NO_x$ concentrations in the off-gas of an FCCU regenerator because the temperature of the regenerator off gas stream is typically low, below about 870°C (1600°F). It should be noted, however, that the present invention can also effectively operate over any temperature range between about 650°C (1200°F) to about 870°C (1600°F).

A readily-oxidizable gas is used to drive the $NO_x$ reduction reaction, said readily-oxidizable gas is selected from the group consisting of paraffinic, olefinic and aromatic hydrocarbons and mixtures thereof, gasoline, fuel oil, oxygenated hydrocarbons, formic and oxalic acids, nitmgenated hydrocarbons, sulfonated hydrocarbons, carbon monoxide, and hydrogen. An effective amount of readily-oxidizable gas is that amount that enables the reducing agents of the present invention to effectively reduce the NOx concentration by the predetermined amount. A molar ratio of about 1:1 to about 50:1 moles of readily-oxidizable gas per mole of reducing agent is considered an effective amount of readily-oxidizable gas, preferably greater than about 10:1 to about 40:1, more preferably about 11:1 to about 40:1, and most preferably about 15:1 to about 30:1. The actual mole ratio employed will be dependent on such things as the temperature of the waste gas stream; the composition of the waste gas stream; the effectiveness of the injection means used for mixing the readily-oxidizable gas with the carrier gas, the reducing agent and the $NO_x$-carrying stream; and the reducing agent utilized. Thus, for a given waste gas stream, the most effective readily-oxidizable gas to reducing agent molar ratio will be in the 1:1 to 50:1 range. The injection of readily-oxidizable gas at rates yielding readily-oxidizable gas to reducing agent molar ratios greater than 10:1 is, in part, made necessary by the low oxygen concentration found in waste gas streams such as the regenerator off-gas. For example, such streams typically contain less than about 1.5% by volume of oxygen.

The reducing agent and readily-oxidizable gas are introduced or conducted into the waste gas stream at a point before at least a portion of the $SO_x$'s present in the stream are removed. At this point, the waste gas stream flowing from the regenerator to the next piece of equipment, typically a COHRU, has a concentration of greater than about 0.1 vol.% oxygen, based on the volume of the stream. Preferably the process stream contains at least about 0.4, more preferably about 0.4 to about 1.5 vol.%. Thus, this stage of the process is especially well suited for treating the regenerator off-gas of a fluidized catalytic cracking unit. It is preferred that the reducing agent and readily-oxidizable gas be introduced directly into a regenerator overhead line of a fluidized catalytic cracking unit ("FCCU") before the carbon monoxide combustion/heat recovery unit associated with the FCCU. It is more preferred that the reducing agent and readily-oxidizable gas be introduced directly into the regenerator overhead line as near the outlet from the regenerator as possible. It is also contemplated within this embodiment that the reducing agent and readily-oxidizable gas be simultaneously conducted or introduced into the regenerator overhead line through multiple points located along the regenerator overhead line.

Since the amount of readily-oxidizable gas and reducing agent used are typically a small percentage of the regenerator off gas flow, typically less than about 0.5% by volume, based on the volume of the stream, it is preferred to use only an effective amount of a readily available and relatively inexpensive carrier material. Non-limiting examples of carrier materials include air and steam; however, any carrier material that does not have a deleterious effect on $NO_x$ reduction, or which itself contributes to undesirable emissions, can be used. Thus, it is contemplated to mix effective amounts of reducing agent and/or readily-oxidizable gas prior to mixing with a carrier material, or within the line that contains the carrier material. It is preferred that the reducing agent/readily-oxidizable gas mixture be injected into the line that conducts the carrier material.

By an effective amount of carrier material, it is meant an amount of carrier material that will adequately mix the reducing agent and the readily-oxidizable gas with the process stream, i.e., maximize the contact of the two reagents with the $NO_x$ sought to be reduced.

The regenerator off gas also typically contains catalyst fines. These catalyst particles may be removed from the regenerator off-gas by any suitable means known in the art. However, the presence of catalyst fines in the regenerator off-gas is believed to assist the $NO_x$ reduction reaction. Thus, the presence of some catalyst fines, although not necessary for the practice of the instant invention, is preferred to assist the $NO_x$ reduction reaction and reduce the amount of readily oxidizable gas that is needed.

In a preferred embodiment of the present invention, effective amounts of a reducing agent and a readily-oxidizable gas, preferably with an effective amount of carrier material, are injected directly into the regenerator's existing overhead line. Thus, the existing overhead line functions as the reaction zone for the $NO_x$ reduction reaction, thereby eliminating the need to add costly processing equipment to effectuate the present process. The injection mixture is preferably injected at a point between the COHRU and the regenerator. It is preferred that the injection occur as near the regenerator off-gas outlet as possible so that the higher temperatures near the regenerator outlet can be utilized, thereby reducing the amount of readily-oxidizable gas needed for a desired level of $NO_x$ reduction. It is also advantageous to maximize the residence time of the reducing agent and readily-oxidizable gas in the $NO_x$ reduction reaction.

In another embodiment, at least two, preferably a plurality of, injection points are used along the regenerator overhead line. Effective amounts of a reducing agent and a readily oxidizable gas, preferably with an effective amount of carrier material, are injected through these multiple injection points, which will typically be between the COHRU and the regenerator. Preferably all injections occur simultaneously. Thus, the existing regenerator overhead line again functions as the reaction zone for the $NO_x$ reduction reaction, thereby eliminating the need to add costly processing equipment to effectuate the present process. Preferably, the simultaneous injections occur as near the regenerator off gas outlet as possible. However, the multiple injection locations are also preferably spaced such that the appropriate residence time between locations is achieved such that the desired effect from the use of multiple injection locations is realized. As previously mentioned, it is advantageous to maximize the residence time of the reducing agent and readily-oxidizable gas in the overhead line to complete the reaction.

. The addition of sodium chlorite to the scrubber liquor is well known and is described in U.S. Patent Number 6,294,139, which has already been incorporated by reference herein. However, in most cases, the reagent that oxidizes the $NO_x$'s to higher oxides (e.g. NO to $NO_2$ and/or $N_2O_5$) is actually chlorine dioxide, not sodium chlorite. Thus, the sodium chlorite is usually injected into the waste gas stream with an acidic component that is capable of disproportionating the sodium ions and chlorine dioxide.

Chlorine dioxide, after it disproportionates from the sodium chlorite molecule, also oxidizes $SO_x$'s to higher oxides. This non-preferential oxidation reaction forced refiners to inject relatively high levels of sodium chlorite into the waste gas stream in order to reduce the $NO_x$'s present in the waste gas stream by a satisfactory amount. As previously discussed, these high levels of sodium chlorite have the undesirable effects of corrosion of process unit hardware, such as scrubbers, problems with waste water treatment and also increased expenditures on reagents.

However, chlorine dioxide, as used in the presently claimed process, is mixed with the waste gas stream at a point after a portion of the $SO_x$'s present in the waste gas stream are removed. The method by which the $SO_x$'s are removed is not essential to the present invention and may be any method known in the art. However, the method chosen by the practitioner of the presently claimed invention should reduce the levels of $SO_x$'s in the waste gas stream to below about 100 ppm, preferably below about 50 ppm, and more preferably below about 10 ppm before the chlorine dioxide is mixed with the waste gas stream. It is most preferred to remove substantially all of the $SO_x$'s present in the waste gas stream are removed before the chlorine dioxide is mixed with the waste gas stream. Non-limiting examples of $SO_x$ removal processes suitable for use herein include wet desulfurization methods such as water scrubbing, alkali scrubbing, magnesia scrubbing, and ammonium scrubbing; as well as dry desulfurization methods such as using manganese oxide or activated carbon. Preferably, the $SO_x$'s are removed by a wet desulfurization method, most preferably by use of a wet gas scrubber.

By mixing the chlorine dioxide with the waste gas stream after the removal of $SO_x$'s, refiners use amounts of chlorine dioxide only slightly greater than stoichiometric amounts. In general, calculating the stoichiometric amount is complicated because the method by which chlorine dioxide converts $NO_x$'s to higher oxides is complex. However, while not wanting to be limited by theory, the inventors hereof believe that the general oxidation reaction whereby chlorine dioxide oxidizes $NO_x$'s can be represented by the following equation:

$$\text{Equation 1: } 5NO + 3ClO_2 + 4H_2O \rightarrow 5HNO_3 + 3HCL$$

Generally, the amount of chlorine dioxide used in the practice of the present invention is about 3 to about 8 moles of $ClO_2$ to about 5 moles of NO. The refiner can also practice the present invention by using about 4 to about 7 moles of $ClO_2$ to about 5 moles of NO. The practitioner preferably uses slightly greater than stoichiometric amounts of chlorine dioxide, which is about 3 to about 4 moles of $ClO_2$ to about 5 moles of $NO_x$.

However, in some instances, the caustic contained in the scrubber may neutralize a portion of the HCl in Equation 1. In such instances where the pH of the system is basic, again while not wanting to be limited by theory, the inventors hereof believe that the general oxidation reaction whereby chlorine dioxide oxidizes lower $NO_x$'s to higher oxides can be represented by the following equation:

$$\text{Equation 2: } 4NO + 3ClO_2^- + 4OH^- \rightarrow 5HNO_3 + 3HCl$$

Thus, in a basic environment, the amount of chlorine dioxide used in the practice of the present invention is about 3 to about 8 moles of $ClO_2$ to about 4 moles of NO. The refiner can also practice the present invention by using about 4 to about 7 moles of $ClO_2$ to about 4 moles of NO. Preferably the practitioner uses slightly greater than stoichiometric amounts of chlorine dioxide, about 3 to about 4 moles of $ClO_2$ to about 4 moles of $NO_x$.

After oxidation of the lower $NO_x$'s to higher nitrogen oxides, at least a portion of the oxidized $NO_x$'s is removed from the waste gas stream. In the practice of the presently claimed invention, about 20 vol.% to about 100 vol.% of the higher oxides are removed after oxidation, preferably about 40 vol.% to about 80 vol.% of the higher oxides are removed after oxidation, more preferably about 60 vol.% to about 90 vol.% of the higher oxides of the $NO_x$'s are removed after oxidation.

The removal of at least a portion of the higher oxides is achieved by any known process in the art, except sodium chlorite absorption. These processes include, but are not limited to, the use of an alkaline solution such as an aqueous caustic, soda solution or a reducing solution such as an aqueous sodium thiosulfate solution; catalytic conversion, and ammonia and hydrogen injection, as described in United States Patent Number 3,900,554 to Lyon, which has already been incorporated herein by reference. Also, it is well known in the art that oxidized $NO_x$ compounds such as $NO_2$ and $N_2O_5$ are water soluble. The solubility of these higher oxides in water is described by J.B. Joshi, V.V. Mahajani, and V.A. Juvekar in "Invited Review: Absorption of NOx Gases," Chemical Engineering Communication, Vol. 33 pp 1-92; which is incorporated herein by reference. Thus, another non-limiting example of a $NO_x$ removal step, and the most preferred embodiment of the present invention, involves absorption of the oxidized $NO_x$ compounds with water.

As previously discussed, at least a portion of the $SO_x$'s present in the waste gas stream can be removed by the use of a wet gas scrubber. These scrubbers remove, among other things, attrited catalyst fines and $SO_x$'s. Thus, in one embodiment of the present invention, the scrubbed and/or saturated gas, sometimes referred to herein as flue gas, is contacted directly with chlorine dioxide ($ClO_2$) at a point downstream from a wet gas scrubber. By contacting the flue gas after the scrubber, the chlorine dioxide can oxidize an increased amount of $NO_x$'s because there are lesser amounts of $SO_x$'s to compete with the oxidation reaction. Further, the low addition rates of $ClO_2$ that are needed to oxidize the lower $NO_x$'s to higher oxides assist the refiner in overcoming a majority of the problems, such as, for example, corrosion, wastewater treatment.

In another embodiment of the presently claimed invention, the chlorine dioxide is mixed with the waste gas in the separator drum associated with a wet gas scrubber. A separator drum typically contains hardware such as spray nozzles. In this embodiment, the chlorine dioxide is sprayed through the spray nozzles such that when the contaminated flue gas stream is fed into the wet gas separator drum, it first contacts the chlorine dioxide. The chlorine dioxide can first be mixed with deionized water which acts as a carrier fluid for the chlorine dioxide. Also, additional amounts of deionized water can be sprayed through the spray nozzles. By additional amounts of deionized water, it is meant amounts of deionized water sufficient to absorb at least a portion of the higher oxides.

In another embodiment of the presently claimed invention, a greater amount of chlorine dioxide necessary to oxidize a portion of the $NO_x$'s present in the waste gas stream is mixed with the waste gas stream after the $SO_x$ removal step. This additional amount of chlorine dioxide allows the refiner the ability to oxidize any $SO_x$'s remaining in the waste gas stream after the $SO_x$ removal step to higher oxides. These higher oxides of $SO_x$'s can then be removed by any method known in the art.

The above description is directed to several means for carrying out the present invention. Those skilled in the art will recognize that other means which are equally effective could be devised for carrying out the spirit of this invention.

## EXAMPLE

The following example will illustrate the effectiveness of the present process, but is not meant to limit the present invention.

## EXAMPLE 1:

The effect of chlorine dioxide on the oxidation of $NO_x$'s was tested in a bubble column. Chlorine dioxide was mixed with a simulated scrubber liquor which contained 1002 ppm $NO_x$. In this experiment, the simulated scrubber liquor was allowed to flow at a rate of 21/min into the bubble column where it was mixed with 1.5 $dm^3$ of a water/chlorine dioxide oxidizing solution containing 107 ppm $ClO_2$. The temperature of the bubble column during the experiment was monitored using a thermocouple device, and the temperature was observed to be 18°C.

A $NO_x$ balance was performed on the bubble column by measuring the concentration of nitrogen oxides in the simulated scrubber liquor before and after mixing with the oxidizing solution. The results of this balance are contained in Table 1 below.

**Table 1**

| Source | Compound | Initial Concentration (Moles) | Final Concentration (Moles) | Percentage of Total Final Concentration in Total Initial Concentration (%) |
|---|---|---|---|---|
| Gas | NO | 0.0017 | - | |
| Gas | NO2 | 0.0004 | 0.0002 | |
| Aqueous | NO2- | - | - | |
| Aqueous | NO3- | - | 0.0019 | |
| | Total | 0.0021 | 0.0021 | 100% |

**Claims**

1. A process for removing $NO_x$'s contained in a $SO_x$ containing waste gas stream, which stream contains both lower and higher nitrogen oxides, which process comprises:

   a) removing at least a portion of the $SO_x$ present in said waste gas stream;
   b) mixing an effective amount of chlorine dioxide with said waste gas stream at a point downstream from step a) above, thereby oxidizing at least a portion of the lower oxide $NO_x$'s present in said waste gas stream to higher oxides; and
   c) removing at least a portion of said higher oxides by a means selected from the group consisting of alkaline solution absorption, reducing solution absorption, scrubbing with water, ammonia injection, and catalytic conversion, **characterised by** steps a), b) and c) being preceded by
   d) forming a mixture of a reducing agent selected from ammonia and urea and a readily-oxidizable gas in an effective amount that will reduce the $NO_x$ concentration of said waste gas stream by a predetermined amount;
   e) injecting said mixture into said waste gas stream at a point wherein said $SO_x$-containing waste gas stream is at a temperature below 870°C (1600°F).

2. The process according to claim 1 wherein said waste gas stream is generated by a fluidized catalytic cracking process unit ("FCCU"), said FCCU having a regenerator.

3. The process according to claim 2 wherein said mixture is injected into regenerator off-gas generated by said FCCU.

4. The process of claim 3 wherein said readily-oxidizable gas is selected from the group consisting of paraffinic, olefinic and aromatic hydrocarbons and mixtures thereof, gasoline, fuel oil, oxygenated hydrocarbons, formic and oxalic acids, nitrogenated hydrocarbons, sulfonated hydrocarbons, carbon monoxide, and hydrogen.

5. The process according to claim 4 wherein said readily-oxidizable gas is hydrogen.

6. The process according to claim 5 wherein said reducing agent is ammonia.

7. The process according to claim 6 wherein said reducing agent is injected in a molar ratio of about 0.5 to about 12 moles per mole of $NO_x$.

8. The process according to claim 7 wherein said reducing agent is injected in a molar ratio of about 0.5 to about 8 moles per mole of $NO_x$.

9. The process according to claim 8 wherein said reducing agent is injected in a molar ratio of about 1 to about 4 moles per mole of $NO_x$.

10. The process according to claim 9 wherein said mixture comprises said readily-oxidizable gas and said reducing agent in a molar ratio of about 1:1 to about 50:1 moles of readily-oxidizable gas per mole of reducing agent.

11. The process according to claim 10 wherein said mixture comprises said readily-oxidizable gas and said reducing agent in a molar ratio of about 10:1 1 to about 40:1 moles of readily oxidizable gas per mole of reducing agent.

12. The process according to claim 11 wherein said mixture comprises said readily-oxidizable gas and said reducing agent in a molar ratio of about 15:1 1 to about 30:1 moles of readily-oxidizable gas per mole of reducing agent.

13. The process according to claim 12 wherein said reducing agent and readily-oxidizable gas are injected with a carrier material such as steam or air.

14. The process according to claim 13 wherein catalyst fines from the regenerator are present in the regenerator off-gas.

15. The process according to claim 14 wherein said mixture is injected into said regenerator off-gas at a point between the regenerator and a carbon monoxide combustion/heat recovery unit (COHRU).

16. The process according to claim 15 wherein said mixture is injected into said regenerator off-gas at a point where the regenerator off-gas is at a temperature in the range of about 650°C (1200°F) to about 870°C (1600°F).

17. The process of claim 1 wherein said predetermined amount is a reduction of $NO_x$ in said process stream by more than about 30 vol.%.

18. The process according to claim 17 wherein said predetermined amount is a reduction of $NO_x$ in said process stream by about 90 vol.%.

19. The process of any one of the preceding claims comprising using a carrier gas with the reducing agent and/or readily-oxydizable gas.


**Patentansprüche**

1. Verfahren zur Entfernung von $NO_x$, das in einem $SO_x$ enthaltenen Abgasstrom enthalten ist, der sowohl niedere als auch höhere Stickoxide enthält, bei dem

    a) mindestens ein Teil des in dem Abgasstrom vorhandenen $SO_x$ entfernt wird,
    b) eine wirksame Menge Chlordioxid mit dem Abgasstrom an einem Punkt stromabwärts von der obigen Stufe a) gemischt wird, wodurch mindestens ein Teil der in dem Abgasstrom vorhandenen niederen Oxide $NO_x$ zu höheren Oxiden oxidiert wird, und
    c) mindestens ein Teil der höheren Oxide durch ein Mittel ausgewählt aus der Gruppe bestehend aus Absorption in alkalischer Lösung, Absorption mit reduzierender Lösung, Wäsche mit Wasser, Ammoniakinjektion und katalytischer Umwandlung entfernt wird, **dadurch gekennzeichnet, dass** vor den Stufen a), b) und c)
    d) eine Mischung aus einem Reduktionsmittel ausgewählt aus Ammoniak und Harnstoff und einem leicht oxidierbaren Gas in einer wirksamen Menge gebildet wird, die die $NO_x$-Konzentration des Abgasstroms um eine festgelegte Menge verringert,
    e) die Mischung in den Abgasstrom an einem Punkt injiziert wird, an dem der $SO_x$-enthaltende Abgasstrom auf einer Temperatur unter 870°C (1600°F) ist.

2. Verfahren nach Anspruch 1, bei dem der Abgasstrom durch eine katalytische Wirbelschicht-Crackanlage ("FCCU") erzeugt wird, wobei die FCCU einen Regenerator aufweist.

3. Verfahren nach Anspruch 2, bei dem die Mischung in von der FCCU erzeugtes Regeneratorabgas injiziert wird.

4. Verfahren nach Anspruch 3, bei dem das leicht oxidierbare Gas aus der Gruppe bestehend aus paraffinischen, olefinischen und aromatischen Kohlenwasserstoffen und Mischungen derselben, Benzin, Brennstofföl, oxygenierten Kohlenwasserstoffen, Ameisensäure und Oxalsäure, stickstoffhaltigen Kohlenwasserstoffen, sulfonierten Kohlenwasserstoffen, Kohlenmonoxid und Wasserstoff ausgewählt ist.

5. Verfahren nach Anspruch 4, bei dem das leicht oxidierbare Gas Wasserstoff ist.

6. Verfahren nach Anspruch 5, bei dem das Reduktionsmittel Ammoniak ist.

7. Verfahren nach Anspruch 6, bei dem das Reduktionsmittel in einem Molverhältnis von etwa 0,5 bis etwa 12 Mol pro Mol $NO_x$ injiziert wird.

8. Verfahren nach Anspruch 7, bei dem das Reduktionsmittel in einem Molverhältnis von etwa 0,5 bis etwa 8 Mol pro Mol $NO_x$ injiziert wird.

9. Verfahren nach Anspruch 8, bei dem das Reduktionsmittel in einem Molverhältnis von etwa 1 bis etwa 4 Mol pro Mol $NO_x$ injiziert wird.

10. Verfahren nach Anspruch 9, bei dem die Mischung das leicht oxidierbare Gas und das Reduktionsmittel in einem Molverhältnis von etwa 1:1 bis etwa 50:1 Mol des leicht oxidierbaren Gases pro Mol des Reduktionsmittels umfasst.

11. Verfahren nach Anspruch 10, bei dem die Mischung das leicht oxidierbare Gas und das Reduktionsmittel in einem Molverhältnis von etwa 10:1 bis etwa 40:1 Mol des leicht oxidierbaren Gases pro Mol des Reduktionsmittels umfasst.

12. Verfahren nach Anspruch 11, bei dem die Mischung das leicht oxidierbare Gas und das Reduktionsmittel in einem Molverhältnis von etwa 15:1 bis etwa 30:1 Mol des leicht oxidierbaren Gases pro Mol des Reduktionsmittels umfasst.

13. Verfahren nach Anspruch 12, bei dem das Reduktionsmittel und das leicht oxidierbare Gas mit einem Trägermaterial wie Wasserdampf oder Luft injiziert werden.

14. Verfahren nach Anspruch 13, bei dem in dem Regeneratorabgas Katalysatorfeinteilchen aus dem Regenerator vorhanden sind.

15. Verfahren nach Anspruch 14, bei dem die Mischung an einem Punkt zwischen dem Regenerator und einer Kohlenmonoxidverbrennungs/Wärmerückgewinnungs-Anlage (COHRU) in das Regeneratorabgas injiziert wird.

16. Verfahren nach Anspruch 15, bei dem die Mischung an einem Punkt in das Regeneratorabgas injiziert wird, an dem sich das Regeneratorabgas auf einer Temperatur im Bereich von etwa 650°C (1200°F) bis etwa 870°C (1600°F) befindet.

17. Verfahren nach Anspruch 1, bei dem die festgelegte Menge eine Reduktion von $NO_x$ in dem Prozessstrom um mehr als etwa 30 Vol.% ist.

18. Verfahren nach Anspruch 17, bei dem die festgelegte Menge eine Reduktion von $NO_x$ in dem Prozessstrom um etwa 90 Vol.% ist.

19. Verfahren nach einem der vorhergehenden Ansprüche, bei dem ein Trägergas mit dem Reduktionsmittel und/oder leicht oxidierbarem Gas verwendet wird.

**Revendications**

1. Procédé d'élimination des $NO_x$ contenus dans un courant de gaz d'échappement contenant $SO_x$, lequel courant contient à la fois des oxydes d'azote inférieurs et des oxydes d'azote supérieurs, procédé qui comprend les étapes suivantes :

   a) l'élimination d'au moins une partie du $SO_x$ présent dans ledit courant de gaz d'échappement ;
   b) le mélange d'une quantité efficace de dioxyde de chlore avec ledit courant de gaz d'échappement en un point en aval de l'étape a) ci-dessus, afin d'oxyder au moins une partie des oxydes $NO_x$ inférieurs présents dans ledit courant de gaz d'échappement en oxydes supérieurs ; et
   c) l'élimination d'au moins une partie desdits oxydes supérieurs par un moyen choisi dans le groupe constitué par l'absorption par une solution alcaline, l'absorption par une solution réductrice, le lavage avec de l'eau, l'injection d'ammoniac et la conversion catalytique, **caractérisé par le fait que** les étapes a), b) et c) sont précédées de
   d) la formation d'un mélange d'un agent réducteur choisi parmi l'ammoniac et l'urée et d'un gaz facilement oxydable en une quantité efficace qui réduira d'une quantité prédéterminée la concentration en $NO_x$ dudit courant de gaz d'échappement ;

e) l'injection dudit mélange dans ledit courant de gaz d'échappement en un point auquel ledit courant de gaz d'échappement contenant $SO_x$ est à une température inférieure à 870°C (1600°F).

2. Procédé selon la revendication 1 dans lequel ledit courant de gaz d'échappement est produit par une unité de craquage catalytique en lit fluidisé ("FCCU"), ladite FCCU comportant un régénérateur.

3. Procédé selon la revendication 2 dans lequel ledit mélange est injecté dans l'effluent gazeux du régénérateur produit par ladite FCCU.

4. Procédé selon la revendication 3 dans lequel ledit gaz facilement oxydable est choisi dans le groupe constitué par les hydrocarbures paraffiniques, oléfiniques et aromatiques et leurs mélanges, l'essence, le fioul, les hydrocarbures oxygénés, les acides formique et oxalique, les hydrocarbures azotés, les hydrocarbures sulfonés, le monoxyde de carbone et l'hydrogène.

5. Procédé selon la revendication 4 dans lequel ledit gaz facilement oxydable est l'hydrogène.

6. Procédé selon la revendication 5 dans lequel ledit agent réducteur est l'ammoniac.

7. Procédé selon la revendication 6 dans lequel ledit agent réducteur est injecté dans un rapport molaire d'environ 0,5 à environ 12 moles par mole de $NO_x$.

8. Procédé selon la revendication 7 dans lequel ledit agent réducteur est injecté dans un rapport molaire d'environ 0,5 à environ 8 moles par mole de $NO_x$.

9. Procédé selon la revendication 8 dans lequel ledit agent réducteur est injecté dans un rapport molaire d'environ 1 à environ 4 moles par mole de $NO_x$.

10. Procédé selon la revendication 9 dans lequel ledit mélange comprend ledit gaz facilement oxydable et ledit agent réducteur dans un rapport molaire d'environ 1:1 à environ 50:1 moles de gaz facilement oxydable par mole d'agent réducteur.

11. Procédé selon la revendication 10 dans lequel ledit mélange comprend ledit gaz facilement oxydable et ledit agent réducteur dans un rapport molaire d'environ 10:1 à environ 40:1 moles de gaz facilement oxydable par mole d'agent réducteur.

12. Procédé selon la revendication 11 dans lequel ledit mélange comprend ledit gaz facilement oxydable et ledit agent réducteur dans un rapport molaire d'environ 15:1 à environ 30:1 moles de gaz facilement oxydable par mole d'agent réducteur.

13. Procédé selon la revendication 12 dans lequel ledit agent réducteur et ledit gaz facilement oxydable sont injectés avec un véhicule tel que la vapeur d'eau ou l'air.

14. Procédé selon la revendication 13 dans lequel des fines de catalyseur provenant du régénérateur sont présentes dans l'effluent gazeux du régénérateur.

15. Procédé selon la revendication 14 dans lequel ledit mélange est injecté dans ledit effluent gazeux du régénérateur en un point situé entre le régénérateur et une unité de combustion du monoxyde de carbone/récupération de la chaleur (COHRU).

16. Procédé selon la revendication 15 dans lequel ledit mélange est injecté dans ledit effluent gazeux du régénérateur en un point où l'effluent gazeux du régénérateur est à une température sur la gamme d'environ 650°C (1200°F) à environ 870°C (1600°F).

17. Procédé selon la revendication 1 dans lequel ladite quantité prédéterminée est une réduction de $NO_x$ de plus d'environ 30 % en volume dans ledit courant de procédé.

18. Procédé selon la revendication 17 dans lequel ladite quantité prédéterminée est une réduction de $NO_x$ d'environ 90 % en volume dans ledit courant de procédé.

**19.** Procédé selon l'une quelconque des revendications précédentes comprenant le fait d'utiliser un gaz vecteur avec l'agent réducteur et/ou le gaz facilement oxydable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3957949 A, Senjo
- US 6294139 B, Vicard
- US 3900554 A, Lyon
- US 4507269 A, Dean
- US 4115515 A, Tenner
- US 4636370 A

- US 4624840 A
- US 4682468 A
- US 4208386 A
- JP 52125462 B
- EP 0962247 A
- US 5846403 A

### Non-patent literature cited in the description

- **KIM ; LEE.** Kinetics of NOx Reduction by Urea Solution in a Pilot Scale Reactor. *Journal of Chemical Engineering of Japan,* 1996, vol. 29 (4), 620-626

- **J.B. JOSHI ; V.V. MAHAJANI ; V.A. JUVEKAR.** Invited Review: Absorption of NOx Gases. *Chemical Engineering Communication,* vol. 33, 1-92